# EUROPEAN PATENT SPECIFICATION

(11) **EP 4 653 269 B1**
(45) Date of publication and mention of the grant of the patent: **09.12.2026**
(21) Application number: 23847752.5
(22) Date of filing: 27.12.2023
(51) Int. Cl.: B60T 7/22, B60T 8/17, B60T 8/26, B60T 8/32, B60T 8/1755, B60W 30/095

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(30) Priority: 17.01.2023 JP 2023004803
(43) Date of publication of application: 26.11.2025
(73) Proprietor: Robert Bosch GmbH, 70442 Stuttgart (DE)
(72) Inventor: IGARI, Yoshihide, Yokohama-shi, Kanagawa 224-8501 (JP); SATO, Akira, Yokohama-shi, Kanagawa 224-8501 (JP)
(86) International application number: PCT/IB2023/063268
(87) International publication number: WO 2024/153997

(56) References cited:
- WO-A1-2019/091744
- CN-A- 104 890 655
- DE-T5- 112020 004 670
- US-A1- 2022 379 889

## Description

### Technical Field

The present disclosure relates to a control device and a control method capable of improving the safety of a straddle type vehicle.

### Background Art

Conventionally, various technologies have been proposed to assist rider's driving of straddle type vehicles such as motorcycles. For example, PTL 1 discloses a driver assisting system which warns a rider of a motorcycle that the rider is inappropriately approaching an obstacle in a traveling direction or a substantially traveling direction on the basis of information detected by a sensor device that detects the obstacle. PTL 2 relates to a method for controlling the movement of a single-track motor vehicle, in which the distance from or the speed relative to a vehicle following the motor vehicle is sensed by means of a rear environment sensor system, which senses the rearward region behind the motor vehicle.

### Citation List

### Patent Literature

PTL 1: JP2009-116882A
PTL **2:** WO 2019/091744 A1

### Summary of Invention

### Technical Problem

Incidentally, as a technology that assists the driving of the vehicle, there is known an emergency braking operation that automatically amplifies a braking force generated in the straddle type vehicle or automatically generates a braking force in the vehicle in response to the possibility of collision of the vehicle with respect to a front object located in front of the vehicle. Then, it is conceived to apply the emergency braking operation to the straddle type vehicle in order to improve the safety of the straddle type vehicle. However, since the straddle type vehicle is more likely to have unstable body attitude than a four-wheeled vehicle and the like, there is a particularly high need to improve safety. Therefore, it is important to appropriately apply the emergency braking operation to the straddle type vehicle so that the safety of the straddle type vehicle is appropriately improved.

The present invention has been made in view of the above-described problems and an object thereof is to obtain a control device and a control method capable of improving the safety of a straddle type vehicle.

### Solution to Problem

The present invention is set out by the appended claims. A control device according to the present invention is a control device for controlling the behavior of a straddle type vehicle, as defined by independent claim 1, including: an execution section which executes an emergency braking operation corresponding to an operation that automatically amplifies a braking force generated in the straddle type vehicle in response to the possibility of collision of the straddle type vehicle with respect to a front object located in front of the straddle type vehicle in a situation in which a brake is operated by a rider of the straddle type vehicle or an operation that automatically generates a braking force in the straddle type vehicle in response to the possibility of collision in a situation in which the brake is not operated, and the execution section executes a braking suppression operation that suppresses the braking of the straddle type vehicle due to the emergency braking operation on the basis of positional relationship information between the straddle type vehicle and a rear vehicle located behind the straddle type vehicle. The execution section limits the braking suppression operation on the basis of vehicle width information of the rear vehicle.

A control method according to the present invention is a control method of controlling the behavior of a straddle type vehicle, as defined by independent claim 14, including: allowing an execution section of a control device to execute an emergency braking operation corresponding to an operation that automatically amplifies a braking force generated in the straddle type vehicle in response to the possibility of collision of the straddle type vehicle with respect to a front object located in front of the straddle type vehicle in a situation in which a brake is operated by a rider of the straddle type vehicle or an operation that automatically generates a braking force in the straddle type vehicle in response to the possibility of collision in a situation in which the brake is not operated, and the execution section executes a braking suppression operation that suppresses the braking of the straddle type vehicle due to the emergency braking operation on the basis of positional relationship information between the straddle type vehicle and a rear vehicle located behind the straddle type vehicle. The execution section limits the braking suppression operation on the basis of vehicle width information of the rear vehicle.

### Advantageous Effects of Invention

In the control device and the control method according to the present invention, the execution section of the control device executes the emergency braking operation corresponding to the operation that automatically amplifies the braking force generated in the straddle type vehicle in response to the possibility of collision of the straddle type vehicle with respect to the front object located in front of the straddle type vehicle in a situation in which the brake is operated by the rider of the straddle type vehicle or the operation that automatically generates the braking force in the straddle type vehicle in response to the possibility of collision in a situation in which the brake is not operated, and the execution section executes the braking suppression operation that suppresses the braking of the straddle type vehicle due to the emergency braking operation on the basis of the positional relationship information between the straddle type vehicle and the rear vehicle located behind the straddle type vehicle. Accordingly, it is possible to optimize the braking of the straddle type vehicle due to the emergency braking operation by taking into consideration of the traffic situation behind the straddle type vehicle. Therefore, it is possible to avoid, for example, the approach or contact of the rear vehicle with respect to the straddle type vehicle. Thus, it is possible to improve the safety of the straddle type vehicle.

### Brief Description of Drawings

Fig. 1 is a schematic view showing a schematic configuration of a straddle type vehicle according to an embodiment of the present invention.
Fig. 2 is a block diagram showing an example of a functional configuration of a control device according to the embodiment of the present invention.
Fig. 3 is a schematic view showing a schematic configuration of a brake system of the straddle type vehicle according to the embodiment of the present invention.
Fig. 4 is a diagram showing a state in which a front vehicle is traveling around the straddle type vehicle according to the embodiment of the present invention.
Fig. 5 is a diagram showing a state in which a front vehicle and a rear vehicle are traveling around the straddle type vehicle according to the embodiment of the present invention.
Fig. 6 is a flowchart showing an example of a flow of a process executed by the control device according to the embodiment of the present invention.

### Description of Embodiments

Hereinafter, a control device and a control method according to the present invention will be described with reference to the drawings.

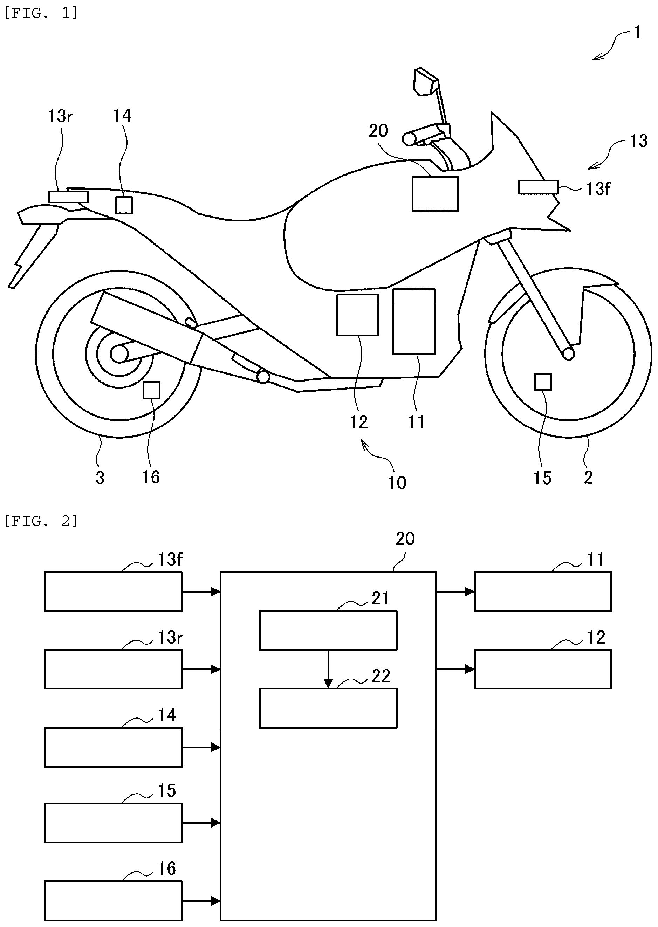

Furthermore, although a control device used for a two-wheeled motorcycle is described (see a straddle type vehicle 1 in Fig. 1), a vehicle to be controlled by the control device according to the present invention may be a straddle type vehicle other than the two-wheeled motorcycle. The straddle type vehicle means a vehicle on which a rider rides astride. The straddle type vehicles include, for example, motorcycles (two-wheeled vehicles, three-wheeled vehicles), bicycles, buggies, and the like. The motorcycles include vehicles powered by engines, vehicles powered by electric motors, and the like. The motorcycles include, for example, motorcycles, scooters, electric scooters, and the like. The bicycle means a vehicle that can be propelled on the road by the rider's pedaling force applied to pedals. The bicycles include regular bicycles, electrically assisted bicycles, electric bicycles, and the like.

Further, although a case will be described below in which an engine (specifically, an engine 11 in Fig. 1 to be described later) is installed as a drive source capable of outputting power to drive a drive wheel, a drive source (for example, an electric motor) other than the engine may be installed as the drive source or a plurality of drive sources may be installed as the drive source.

Further, although a case will be described below in which a control unit (specifically, a hydraulic pressure control unit 12 in Fig. 1 to be described later) controlling a hydraulic pressure of brake fluid is adopted as a control unit for a braking force generated in a wheel, a control unit (so-called brake-by-wire) that controls the position of the brake part itself of the wheel using an electrical signal may be adopted as the control unit of the braking force generated in the wheel.

Further, the configuration, operation, and the like described below are merely examples and the control device and the control method according to the present invention are not limited to such configurations, operations, and the like.

Further, the same or similar descriptions are simplified or omitted as appropriate below. Further, in each figure, the same or similar members or parts are indicated by the same reference numerals or the reference numerals are omitted. Further, detailed structures are simplified or omitted as appropriate.

### <Configuration of straddle type vehicle>

Referring to Figs. 1 to 4, the configuration of the straddle type vehicle 1 according to the embodiment of the present invention will be described.

Fig. 1 is a schematic view showing a schematic configuration of the straddle type vehicle **1.** The straddle type vehicle 1 is a two-wheeled motorcycle corresponding to an example of the straddle type vehicle according to the present invention. As shown in Fig. 1, the straddle type vehicle 1 includes a front wheel 2, a rear wheel 3, the engine 11, the hydraulic pressure control unit 12, a surrounding environment sensor 13, an inertial measurement device (IMU) 14, a front wheel speed sensor 15, a rear wheel speed sensor 16, and a control device (ECU) 20. The surrounding environment sensor 13 includes a front surrounding environment sensor 13f and a rear surrounding environment sensor 13r.

The engine 11 corresponds to an example of the drive source of the straddle type vehicle 1 and can output power for driving a drive wheel (specifically, the rear wheel 3). For example, the engine 11 is provided with one or more cylinders each having a combustion chamber, a fuel injection valve injecting fuel into the combustion chamber, and a spark plug. When fuel is injected from the fuel injection valve, a mixture containing air and fuel is formed in the combustion chamber and the mixture is burned by being ignited by the spark plug. Accordingly, a piston inside the cylinder moves in a reciprocating manner to rotate a crankshaft. Further, a throttle valve is provided in an intake pipe of the engine 11, and the amount of air taken into the combustion chamber changes depending on a throttle opening which is the opening of the throttle valve.

The hydraulic pressure control unit 12 is a unit that has a function of controlling the braking force generated in the wheel. For example, the hydraulic pressure control unit 12 is provided on a hydraulic line connecting a master cylinder and a wheel cylinder and includes components (for example, a control valve and a pump) for controlling the brake hydraulic pressure of the wheel cylinder. Since the operation of the components of the hydraulic pressure control unit 12 is controlled, the braking force generated in the wheel is controlled. Furthermore, details of a brake system 10 including the hydraulic pressure control unit 12 will be described later.

The surrounding environment sensor 13 detects surrounding environment information on the environment around the straddle type vehicle 1. The front surrounding environment sensor 13f is provided in a front part of the straddle type vehicle 1 and detects the front surrounding environment information of the straddle type vehicle 1. The rear surrounding environment sensor 13r is provided in a rear part of the straddle type vehicle 1 and detects the rear surrounding environment information of the straddle type vehicle 1. The surrounding environment information detected by each surrounding environment sensor 13 is output to a control device 20.

The surrounding environment information detected by the surrounding environment sensor 13 may be information related to the distance or direction to the subject located around the straddle type vehicle 1 (for example, relative position, relative distance, relative speed, relative acceleration, and the like) and may be the characteristics of the subject located around the straddle type vehicle 1 (for example, the type of the subject, the shape of the subject itself, marks attached to the subject, and the like) . The surrounding environment sensor 13 is, for example, a radar, a lidar sensor, an ultrasonic sensor, a camera, or the like.

Furthermore, the surrounding environment information can also be detected by the surrounding environment sensor installed in the other vehicle or infrastructure equipment. That is, the control device 20 can also acquire the surrounding environment information via wireless communication with other vehicles or infrastructure equipment.

The inertial measurement device 14 includes a three-axis gyro sensor and a three-direction acceleration sensor, and detects the attitude of the straddle type vehicle 1. The inertial measurement device 14 is provided, for example, in the body of the straddle type vehicle 1. For example, the inertial measurement device 14 detects the lean angle of the straddle type vehicle 1 and outputs the detection result. The inertial measurement device 14 may detect other physical quantities that can be substantially converted into the lean angle of the straddle type vehicle 1. The lean angle corresponds to an angle indicating the inclination of the vehicle body (specifically, the body) of the straddle type vehicle 1 in the roll direction with respect to the vertically upward direction. The inertial measurement device 14 may include only a part of the three-axis gyro sensor and the three-direction acceleration sensor.

The front wheel speed sensor 15 is a wheel speed sensor which detects the wheel speed of the front wheel 2 (for example, the number of rotations per unit time [rpm] of the front wheel 2 or the moving distance per unit time [km/h]) and outputs the detection result. The front wheel speed sensor 15 may detect other physical quantities that can be substantially converted into the wheel speed of the front wheel 2. The front wheel speed sensor 15 is provided in the front wheel 2.

The rear wheel speed sensor 16 is a wheel speed sensor which detects the wheel speed of the rear wheel 3 (for example, the number of rotations per unit time [rpm] of the rear wheel 3 or the moving distance per unit time [km/h]) and outputs the detection result. The rear wheel speed sensor 16 may detect other physical quantities that can be substantially converted into the wheel speed of the rear wheel 3. The rear wheel speed sensor 16 is provided in the rear wheel 3.

The control device 20 controls the behavior of the straddle type vehicle 1. For example, a part or all of the control device 20 is composed of a microcomputer, a microprocessor unit, a memory, and the like. Further, for example, a part or all of the control device 20 may be composed of something that can be updated such as firmware or may be a program module or the like executed by a command from a CPU or the like. For example, the control device 20 may be a single device or divided into a plurality of devices.

Fig. 2 is a block diagram showing an example of the functional configuration of the control device 20. As shown in Fig. 2, the control device 20 includes, for example, an acquisition section 21 and an execution section 22. Further, the control device 20 communicates with each device of the straddle type vehicle 1.

The acquisition section 21 acquires information from each device of the straddle type vehicle 1 and outputs the information to the execution section 22. For example, the acquisition section 21 acquires information from the front surrounding environment sensor 13f, the rear surrounding environment sensor 13r, the inertial measurement device 14, the front wheel speed sensor 15, and the rear wheel speed sensor 16. Furthermore, in the present specification, acquiring information may include extracting or generating information (for example, calculated).

The execution section 22 executes various controls by controlling the operation of each device of the straddle type vehicle 1. The execution section 22 controls, for example, the operations of the engine 11 and the hydraulic pressure control unit 12.

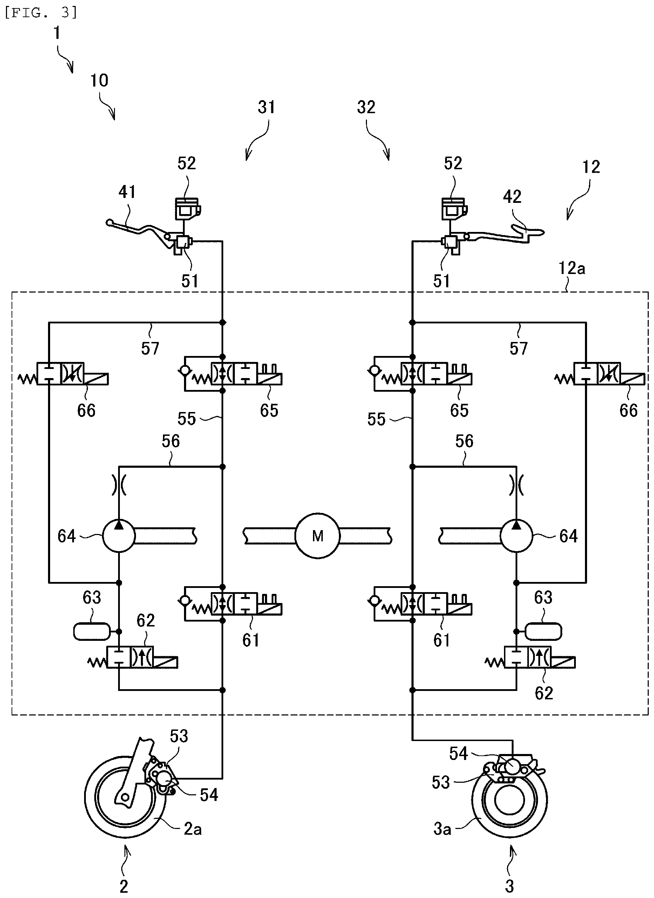

Here, the schematic configuration of the brake system 10 of the straddle type vehicle 1 and the control of the braking force generated in the straddle type vehicle 1 will be described with reference to Fig. 3. Fig. 3 is a schematic view showing a schematic configuration of the brake system 10 of the straddle type vehicle 1. As shown in Fig. 3, the brake system 10 includes a front wheel braking mechanism 31, a rear wheel braking mechanism 32, a first brake operation unit 41, and a second brake operation unit 42. The first brake operation unit 41 is, for example, a brake lever. The front wheel braking mechanism 31 brakes the front wheel 2 in conjunction with at least the first brake operation unit 41. The second brake operation unit 42 is, for example, a brake pedal. The rear wheel braking mechanism 32 brakes the rear wheel 3 in conjunction with at least the second brake operation unit 42. A part of the front wheel braking mechanism 31 and a part of the rear wheel braking mechanism 32 are included in the hydraulic pressure control unit 12.

Each of the front wheel braking mechanism 31 and the rear wheel braking mechanism 32 includes a master cylinder 51 which contains a piston (not shown), a reservoir 52 which is attached to the master cylinder 51, a brake caliper 53 which is held in the body of the straddle type vehicle 1 and has a brake pad (not shown), a wheel cylinder 54 which is provided in the brake caliper 53, a main flow path 55 which allows the brake fluid in the master cylinder 51 to flow to the wheel cylinder 54, a sub-flow path 56 which releases the brake fluid in the wheel cylinder 54, and a supply flow path 57 which supplies the brake fluid in the master cylinder 51 to the sub-flow path 56.

An inlet valve (EV) 61 is provided in the main flow path 55. The sub-flow path 56 bypasses the main flow path 55 between the side of the wheel cylinder 54 and the side of the master cylinder 51 with respect to the inlet valve 61. The sub-flow path 56 is provided with an outlet valve (AV) 62, an accumulator 63, and a pump 64 in order from the upstream side. A first valve (USV) 65 is provided between the end on the side of the master cylinder 51 and the connection position of the downstream end of the sub-flow path 56, in the main flow path 55. The supply flow path 57 allows the master cylinder 51 to communicate with the intake side of the pump 64 in the sub-flow path 56. A second valve (HSV) 66 is provided in the supply flow path 57.

The inlet valve 61 is, for example, a solenoid valve that is opened in a non-energized state and is closed in an energized state. The outlet valve 62 is, for example, a solenoid valve that is closed in a non-energized state and is opened in an energized state. The first valve 65 is, for example, a solenoid valve that is opened in a non-energized state and is closed in an energized state. The second valve 66 is, for example, a solenoid valve that is closed in a non-energized state and is opened in an energized state.

The hydraulic pressure control unit 12 includes components which control the brake hydraulic pressure, including the inlet valve 61, the outlet valve 62, the accumulator 63, the pump 64, the first valve 65, and the second valve 66 and a base body 12a in which these components are provided and flow paths for forming the main flow path 55, the sub-flow path 56, and the supply flow path 57 are formed.

Furthermore, the base body 12a may be formed of one member or a plurality of members. Further, when the base body 12a is formed of a plurality of members, each component may be provided separately in different members.

The operation of the component of the hydraulic pressure control unit 12 is controlled by the execution section 22 of the control device 20. Accordingly, the braking force generated in the front wheel 2 by the front wheel braking mechanism 31 and the braking force generated in the rear wheel 3 by the rear wheel braking mechanism 32 are controlled.

In a normal state (that is, when the setting is made to generate a braking force in response to the rider's braking operation), the control device 20 opens the inlet valve 61, closes the outlet valve 62, opens the first valve 65, and closes the second valve 66. When the first brake operation unit 41 is operated in this state, in the front wheel braking mechanism 31, the piston (not shown) of the master cylinder 51 is pressed inward to increase the hydraulic pressure of brake fluid of the wheel cylinder 54 and the brake pad (not shown) of the brake caliper 53 is pressed against a rotor 2a of the front wheel 2 to generate a braking force in the front wheel 2. Further, when the second brake operation unit 42 is operated, in the rear wheel braking mechanism 32, the piston (not shown) of the master cylinder 51 is pressed inward to increase the hydraulic pressure of brake fluid of the wheel cylinder 54 and the brake pad (not shown) of the brake caliper 53 is pressed against a rotor 3a of the rear wheel 3 to generate a braking force in the rear wheel 3.

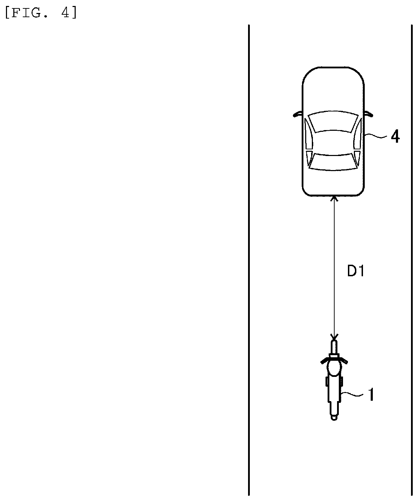

Here, the execution section 22 can execute an emergency braking operation that automatically controls the braking force acting on the straddle type vehicle 1 in order to suppress the straddle type vehicle 1 from colliding with a front object. The front object is an object located in front of the straddle type vehicle 1 and is, for example, a front vehicle located in front of the straddle type vehicle 1 (see a front vehicle 4 of Fig. 4 to be described later). However, the front object may be other than the vehicle, and may be, for example, an animal or a wall.

Specifically, the emergency braking operation includes an operation that automatically amplifies the braking force generated in the straddle type vehicle 1 in response to the possibility of collision of the straddle type vehicle 1 with respect to the front object in a situation in which the rider of the straddle type vehicle 1 is operating the brake. Such an operation is also called EBA (Emergency Brake Assist).

Further, the emergency braking operation includes an operation that automatically generates a braking force in the straddle type vehicle 1 in response to the possibility of collision of the straddle type vehicle 1 with respect to the front object in a situation in which the rider of the straddle type vehicle 1 is not operating the brake. Such an operation is also called AEB (Automatic Emergency Brake).

Fig. 4 is a diagram showing a state in which the front vehicle 4 is traveling around the straddle type vehicle **1.** As shown in Fig. 4, the front vehicle 4 travels in the same travel lane as that of the straddle type vehicle 1 and is located in front of the straddle type vehicle 1. In the example of Fig. 4, the front vehicle 4 corresponds to the front object in the emergency braking operation. Furthermore, in the example of Fig. 4, the front vehicle 4 is a four-wheeled vehicle, but the vehicle corresponding to the front object in the emergency braking operation may be a vehicle (for example, a straddle type vehicle or the like) other than the four-wheeled vehicle.

In the example of Fig. 4, the execution section 22 determines whether the possibility of collision of the straddle type vehicle 1 with respect to the front vehicle 4 exceeds a reference on the basis of, for example, positional relationship information which is the information of the positional relationship between the straddle type vehicle 1 and the front vehicle 4. Then, the execution section 22 executes the emergency braking operation when it is determined that the possibility of collision exceeds the reference. For example, if the rider operates the brake when determining that the possibility of collision exceeds the reference, the execution section 22 executes an operation that automatically amplifies the braking force generated in the straddle type vehicle 1 as the emergency braking operation. Further, for example, if the rider does not operate the brake when determining that the possibility of collision exceeds the reference, the execution section 22 executes an operation that automatically generates a braking force in the straddle type vehicle 1 as the emergency braking operation.

The positional relationship information between the object (for example, the front vehicle 4) around the straddle type vehicle 1 and the straddle type vehicle 1 may include, for example, information such as the relative position, relative distance, relative speed, relative acceleration, relative jerk, passing time difference, or TTC (Time To Collision) of the straddle type vehicle 1 with respect to the object. Furthermore, the passing time difference is a value obtained by dividing the relative distance of the straddle type vehicle 1 to the object by the speed of the straddle type vehicle 1. For example, the speed of the straddle type vehicle 1 can be acquired on the basis of the wheel speed of the front wheel 2 and the wheel speed of the rear wheel 3. TTC is a value obtained by dividing the relative distance of the straddle type vehicle 1 to the object by the relative speed of the straddle type vehicle 1 to the object. However, the positional relationship information may be information on other physical quantities that can be substantially converted into this information. For example, the positional relationship information can be acquired on the basis of the surrounding environment information of the straddle type vehicle 1.

For example, the acquisition section 21 can acquire the positional relationship information between the straddle type vehicle 1 and the front vehicle 4 on the basis of the front surrounding environment information of the straddle type vehicle 1 obtained from the front surrounding environment sensor 13f and the like. Then, the execution section 22 can determine whether the possibility of collision of the straddle type vehicle 1 with respect to the front vehicle 4 exceeds the reference on the basis of TTC calculated by using the inter-vehicle distance D1 between the straddle type vehicle 1 and the front vehicle 4 and the relative speed of the straddle type vehicle 1 with respect to the front vehicle 4. Furthermore, the inter-vehicle distance D1 may mean a distance in a direction along a lane (specifically, the travel lane of the straddle type vehicle 1) or may mean a straight-line distance.

Specifically, the possibility of collision of the straddle type vehicle 1 with respect to the front vehicle 4 means the possibility that the straddle type vehicle 1 may collide with the front vehicle 4 even when the front vehicle 4 does not suddenly brake. Then, the case when determining that there is a possibility of collision of the straddle type vehicle 1 with respect to the front vehicle 4 even when the front vehicle 4 does not suddenly brake corresponds to the case where the possibility of collision exceeds the reference.

In the emergency braking operation, the execution section 22 drives the pump 64, for example, in a state in which the inlet valve 61 is opened, the outlet valve 62 is closed, the first valve 65 is closed, and the second valve 66 is opened to increase the hydraulic pressure of brake fluid of the wheel cylinder 54. Accordingly, if the rider operates the brake, the braking force generated in the straddle type vehicle 1 can be automatically amplified. Further, if the rider does not operate the brake, a braking force can be automatically generated in the straddle type vehicle 1.

Furthermore, in the emergency braking operation, the execution section 22 may control both the braking force acting on the front wheel 2 and the braking force acting on the rear wheel 3 or only one of the braking force acting on the front wheel 2 and the braking force acting on the rear wheel 3.

Although the brake system 10 has been described above with reference to Fig. 3, the example of Fig. 3 is merely an example and the configuration of the brake system 10 is not limited to the example of Fig. 3. For example, the hydraulic pressure control unit 12 may control only the braking force generated in one of the front wheel 2 and the rear wheel 3.

### <Operation of control device>

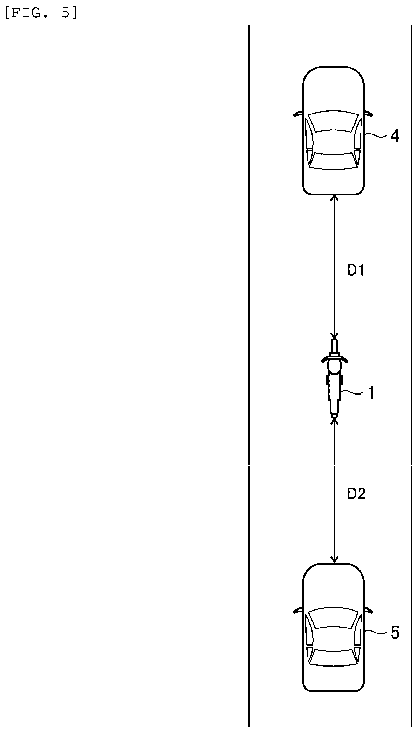

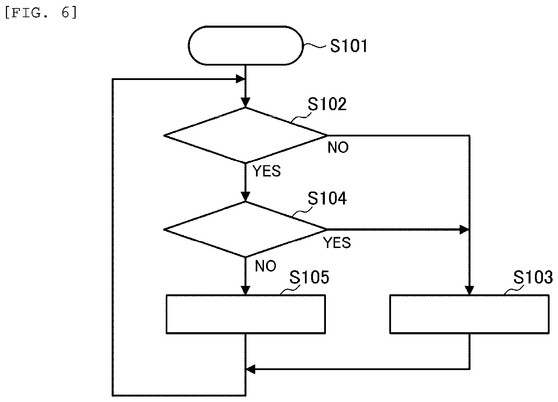

Referring to Figs. 5 and 6, the operation of the control device 20 according to the embodiment of the present invention will be described.

As described above, the execution section 22 can execute the emergency braking operation. In this embodiment, as will be described later, the execution section 22 executes a braking suppression operation that suppresses the braking of the straddle type vehicle 1 due to the emergency braking operation on the basis of the positional relationship information between the straddle type vehicle 1 and the rear vehicle (see a rear vehicle 5 of Fig. 5 to be described later). Accordingly, it is possible to realize improving the safety of the straddle type vehicle 1. Furthermore, the rear vehicle is a vehicle located behind the straddle type vehicle 1.

Fig. 5 is a diagram showing a state in which the front vehicle 4 and the rear vehicle 5 are traveling around the straddle type vehicle 1. As shown in Fig. 5, the rear vehicle 5 travels in the same travel lane as that of the straddle type vehicle 1 and is located behind the straddle type vehicle 1. In the example of Fig. 5, the rear vehicle 5 is a four-wheeled vehicle, but may be a vehicle (for example, a straddle type vehicle or the like) other than the four-wheeled vehicle.

The positional relationship information between the straddle type vehicle 1 and the rear vehicle 5 may include, for example, information such as the relative position, relative distance, relative speed, relative acceleration, relative jerk, passing time difference, or TTC of the rear vehicle 5 with respect to the straddle type vehicle 1. However, the positional relationship information between the straddle type vehicle 1 and the rear vehicle 5 may be information on other physical quantities that can be substantially converted into this information. For example, the acquisition section 21 can acquire the positional relationship information between the straddle type vehicle 1 and the rear vehicle 5 on the basis of the rear surrounding environment information of the straddle type vehicle 1.

In the control flow shown in Fig. 6 to be described below, the braking suppression operation is realized by a setting change process in the emergency braking operation. Specifically, in the emergency braking operation, the upper limit deceleration which is the upper limit value of the deceleration generated in the straddle type vehicle 1 and the upper limit deceleration change rate which is the upper limit value of the deceleration change rate generated in the straddle type vehicle 1 are set. Then, in the emergency braking operation, the execution section 22 limits the deceleration generated in the straddle type vehicle 1 to the upper limit deceleration or less and limits the deceleration change rate generated in the straddle type vehicle 1 to the upper limit deceleration change rate or less. In the control flow shown in Fig. 6 to be described later, the braking suppression operation is realized by changing the settings of the upper limit deceleration and the upper limit deceleration change rate.

Specifically, in the emergency braking operation, the execution section 22 determines the target deceleration which is the target value of the deceleration generated in the straddle type vehicle 1 and the target deceleration change rate which is the target value of the deceleration change rate generated in the straddle type vehicle 1 on the basis of the positional relationship information between the straddle type vehicle 1 and the front object. Then, when the target deceleration is the upper limit deceleration or less, the execution section 22 generates the same deceleration as the target deceleration in the straddle type vehicle 1 by the emergency braking operation. On the other hand, when the target deceleration is larger than the upper limit deceleration, the execution section 22 generates the same deceleration as the upper limit deceleration in the straddle type vehicle 1 by the emergency braking operation. Further, when the target deceleration change rate is the upper limit deceleration change rate or less, the execution section 22 generates the same deceleration change rate as the target deceleration change rate in the straddle type vehicle 1 by the emergency braking operation. On the other hand, when the target deceleration change rate is larger than the upper limit deceleration change rate, the execution section 22 generates the same deceleration change rate as the upper limit deceleration change rate in the straddle type vehicle 1 by the emergency braking operation.

Fig. 6 is a flowchart showing an example of a flow of a process executed by the control device 20. Step S101 in Fig. 6 corresponds to the start of the control flow shown in Fig. 6.

When the control flow shown in Fig. 6 is started, in step S102, the execution section 22 determines whether the inter-vehicle distance D2 between the straddle type vehicle 1 and the rear vehicle 5 (that is, the relative distance of the rear vehicle 5 with respect to the straddle type vehicle 1) is shorter than the reference distance.

As will be described later, the braking suppression operation is executed when the determination in step S102 is YES (that is, when it is determined that the inter-vehicle distance D2 between the straddle type vehicle 1 and the rear vehicle 5 is shorter than the reference distance). For example, the reference distance is set to a distance which is short enough to cause the possibility of the approach or contact of the rear vehicle 5 with respect to the straddle type vehicle 1 when the emergency braking operation is executed. Therefore, when the inter-vehicle distance D2 between the straddle type vehicle 1 and the rear vehicle 5 is shorter than the reference distance, the braking suppression operation is executed to suppress the braking of the straddle type vehicle 1 due to the emergency braking operation. As a result, it is possible to avoid the approach or contact of the rear vehicle 5 with respect to the straddle type vehicle 1.

However, the determination of step S102 may be made on the basis of the positional relationship information between the straddle type vehicle 1 and the rear vehicle 5 or the positional relationship information other than the inter-vehicle distance D2 between the straddle type vehicle 1 and the rear vehicle 5. Specifically, in the determination of step S102, the determination on the possibility of the approach or contact of the rear vehicle 5 with respect to the straddle type vehicle 1 when the emergency braking operation is executed may be made on the basis of the positional relationship information between the straddle type vehicle 1 and the rear vehicle 5. For example, in step S102, the execution section 22 may determine whether there is a possibility of the approach or contact of the rear vehicle 5 with respect to the straddle type vehicle 1 when the emergency braking operation is executed on the basis of TTC or passing time difference of the rear vehicle 5 with respect to the straddle type vehicle 1.

When it is determined that the inter-vehicle distance D2 between the straddle type vehicle 1 and the rear vehicle 5 is longer than the reference distance (step S102/NO), the process proceeds to step S103. Then, in step S103, the execution section 22 switches the settings of the upper limit deceleration and the upper limit deceleration change rate of the emergency braking operation to the first setting and returns to step S102. The upper limit deceleration set in the first setting is larger than the upper limit deceleration set in the second setting to be described later and the upper limit deceleration change rate set in the first setting is larger than the upper limit deceleration change rate set in the second setting to be described later.

On the other hand, when it is determined that the inter-vehicle distance D2 between the straddle type vehicle 1 and the rear vehicle 5 is shorter than the reference distance (step S102/YES), the process proceeds to step S104. Then, in step S104, the execution section 22 determines whether the limitation condition for the braking suppression operation is satisfied.

As will be described later, when the determination is YES in step S104 (that is, when it is determined that the limitation condition for the braking suppression operation is satisfied), the braking suppression operation is not executed. That is, the limitation condition is a condition for limiting (specifically, prohibiting) the braking suppression operation. Furthermore, as will be described later, limiting the braking suppression operation is not limited to prohibiting the braking suppression operation, but also includes weakening the degree of suppression of braking of the straddle type vehicle 1 in the braking suppression operation.

Various conditions can be exemplified as the limitation condition for the braking suppression operation. Hereinafter, examples of the limitation condition for the braking suppression operation will be described.

For example, the limitation condition may be a condition regarding vehicle type information of the rear vehicle 5. That is, the execution section 22 may limit the braking suppression operation on the basis of the vehicle type information of the rear vehicle 5. For example, the vehicle type information of the rear vehicle 5 is information indicating whether the rear vehicle 5 is a motorcycle, a four-wheeled passenger car, or a truck. For example, the condition that the rear vehicle 5 is the motorcycle may be used as the limitation condition. When the rear vehicle 5 is the motorcycle, the rear vehicle 5 can easily avoid the straddle type vehicle 1 when the emergency braking operation is executed and hence the execution section 22 may limit the braking suppression operation.

For example, the acquisition section 21 can acquire the vehicle type information of the rear vehicle 5 by performing image processing on an image showing the rear vehicle 5 (for example, an image obtained as the surrounding environment information by the rear surrounding environment sensor 13r when a camera is used as the rear surrounding environment sensor 13r). Further, the acquisition section 21 may acquire the vehicle type information of the rear vehicle 5, for example, by communication with the rear vehicle 5.

Further, for example, the limitation condition may be a condition regarding vehicle width information of the rear vehicle 5. That is, the execution section 22 may limit the braking suppression operation on the basis of the vehicle width information of the rear vehicle 5. For example, the vehicle width information of the rear vehicle 5 may be information indicating the value of the vehicle width of the rear vehicle 5, rough information in which the vehicle width of the rear vehicle 5 is expressed in several stages, or information that can be substantially converted into such information. For example, a condition that the vehicle width of the rear vehicle 5 is shorter than the reference vehicle width may be used as the limitation condition. When the vehicle width of the rear vehicle 5 is shorter than the reference vehicle width, the rear vehicle 5 can easily avoid the straddle type vehicle 1 when the emergency braking operation is executed and hence the execution section 22 may limit the braking suppression operation. The reference vehicle width is set, for example, to a value with which whether the rear vehicle 5 easily avoids the straddle type vehicle 1 can be appropriately determined when the emergency braking operation is executed.

For example, the acquisition section 21 can acquire the vehicle width information of the rear vehicle 5 by performing image processing on an image showing the rear vehicle 5 (for example, an image obtained as the surrounding environment information by the rear surrounding environment sensor 13r when a camera is used as the rear surrounding environment sensor 13r). Further, the acquisition section 21 may acquire the vehicle width information of the rear vehicle 5, for example, by communication with the rear vehicle 5.

Further, for example, the limitation condition may be a condition regarding blinker information of the rear vehicle 5. That is, the execution section 22 may limit the braking suppression operation on the basis of the blinker information of the rear vehicle 5. The blinker information of the rear vehicle 5 is, for example, information indicating the operation state of the blinker of the rear vehicle 5. For example, the condition that one of the left and right blinkers of the rear vehicle 5 is blinking may be used as the limitation condition. When one blinker of the left and right blinkers of the rear vehicle 5 is blinking, it is expected that the rear vehicle 5 will change lanes. Accordingly, since the rear vehicle 5 can easily avoid the straddle type vehicle 1 when the emergency braking operation is executed, the execution section 22 may limit the braking suppression operation.

For example, the acquisition section 21 can acquire the blinker information of the rear vehicle 5 by performing image processing on an image showing the rear vehicle 5 (for example, an image obtained as the surrounding environment information by the rear surrounding environment sensor 13r when a camera is used as the rear surrounding environment sensor 13r). Further, the acquisition section 21 may acquire the blinker information of the rear vehicle 5, for example, by communication with the rear vehicle 5.

Further, for example, the limitation condition may be a condition regarding skill level information of the driver of the rear vehicle 5. That is, the execution section 22 may limit the braking suppression operation on the basis of the skill level information of the driver of the rear vehicle 5. The skill level information of the driver of the rear vehicle 5 may be, for example, information indicating whether a beginner's mark is affixed to the rear vehicle 5 or information indicating the evaluation point of the skill level of the driver of the rear vehicle 5. For example, a condition that the evaluation point of the skill level of the driver of the rear vehicle 5 is higher than the reference point may be used as the limitation condition. When the evaluation point of the skill level of the driver of the rear vehicle 5 is higher than the reference point, the rear vehicle 5 can easily avoid the straddle type vehicle 1 when the emergency braking operation is executed and hence the execution section 22 may limit the braking suppression operation. The reference point is set, for example, to a value with which whether the rear vehicle 5 easily avoids the straddle type vehicle 1 can be appropriately determined when the emergency braking operation is executed.

For example, the acquisition section 21 can acquire information indicating whether a beginner's mark is affixed to the rear vehicle 5 as the skill level information of the driver of the rear vehicle 5 by performing image processing on an image showing the rear vehicle 5 (for example, an image obtained as the surrounding environment information by the rear surrounding environment sensor 13r when a camera is used as the rear surrounding environment sensor 13r). Further, the acquisition section 21 can acquire information indicating the evaluation point of the skill level of the driver of the rear vehicle 5 as the skill level information of the driver of the rear vehicle 5, for example, by communication with the rear vehicle 5.

Further, for example, the limitation condition may be a condition regarding the information of the traveling position of the straddle type vehicle 1 in the lane width direction. That is, the execution section 22 may limit the braking suppression operation on the basis of the information of the traveling position of the straddle type vehicle 1 in the lane width direction. For example, a condition that the traveling position of the straddle type vehicle 1 in the lane width direction is on the edge side of the lane may be used as the limitation condition. When the traveling position of the straddle type vehicle 1 in the lane width direction is on the edge side of the lane, the rear vehicle 5 can easily avoid the straddle type vehicle 1 when the emergency braking operation is executed and hence the execution section 22 may limit the braking suppression operation.

For example, the acquisition section 21 can acquire the traveling position of the straddle type vehicle 1 in the lane width direction on the basis of the surrounding environment information of the straddle type vehicle 1.

Further, for example, the limitation condition may be a condition regarding the positional relationship information between the straddle type vehicle 1 and the rear vehicle 5 in the lane width direction. That is, the execution section 22 may limit the braking suppression operation on the basis of the positional relationship information between the straddle type vehicle 1 and the rear vehicle 5 in the lane width direction. For example, when the distance between the straddle type vehicle 1 and the rear vehicle 5 in the lane width direction is wider than the reference distance, the rear vehicle 5 can easily avoid the straddle type vehicle 1 when the emergency braking operation is executed and hence the execution section 22 may limit the braking suppression operation. The reference distance is set, for example, to a value with which whether the rear vehicle 5 easily avoids the straddle type vehicle 1 can appropriately be determined when the emergency braking operation is executed.

For example, the acquisition section 21 can acquire the positional relationship information between the straddle type vehicle 1 and the rear vehicle 5 in the lane width direction on the basis of the surrounding environment information of the straddle type vehicle 1.

Further, for example, the limitation condition may be a condition regarding the determination result of the straightness of at least one of the traveling and traveling road of the straddle type vehicle 1. That is, the execution section 22 may limit the braking suppression operation on the basis of the determination result of the straightness of at least one of the traveling and traveling road of the straddle type vehicle 1. Furthermore, the straightness can mean, for example, the degree of straightness or the accuracy of straightness. The determination on the straightness of the traveling of the straddle type vehicle 1 is, for example, a determination on whether the straddle type vehicle 1 is traveling straight or traveling on a curve. The determination of the straightness of the traveling road of the straddle type vehicle 1 is, for example, determining whether the traveling road of the straddle type vehicle 1 is a straight road or a curved road. For example, when the straddle type vehicle 1 is traveling on a curve or the traveling road of the straddle type vehicle 1 is a curved road, the rear vehicle 5 can easily avoid the straddle type vehicle 1 when the emergency braking operation is executed. Further, since there is a risk of vehicle body behavior that is not intended by the rider when the braking force acting on the straddle type vehicle 1 is suppressed by the braking suppression operation, the execution section 22 may limit the braking suppression operation. Furthermore, the execution section 22 may limit the braking suppression operation when the straddle type vehicle 1 is traveling straight or the traveling road of the straddle type vehicle 1 is a straight road.

For example, the execution section 22 can determine the straightness of the traveling of the straddle type vehicle 1 and determine the straightness of the traveling road on the basis of the lean angle of the straddle type vehicle 1 detected by the inertial measurement device 14. Furthermore, the execution section 22 may determine the straightness of the traveling of the straddle type vehicle 1 and the straightness of the traveling road on the basis of information other than the lean angle of the straddle type vehicle 1 (for example, the yaw rate, lateral acceleration, or steering angle of the straddle type vehicle 1).

An example of the limitation condition for the braking suppression operation has been described above. However, the limitation condition for the braking suppression operation may be conditions other than the above-described examples. Further, the limitation condition for the braking suppression operation may be a combination of multiple types of conditions. For example, the limitation condition for the braking suppression operation may be a combination of multiple types of conditions arbitrarily selected from the above-described examples. That is, the execution section 22 may limit the braking suppression operation on the basis of multiple types of information arbitrarily selected from the above-described information.

When it is determined that the limitation condition for the braking suppression operation is satisfied (step S104/YES), the process proceeds to step S103. Then, in step S103, the execution section 22 switches the setting of the upper limit deceleration and the upper limit deceleration change rate of the emergency braking operation to the first setting and returns to step S102.

On the other hand, when it is determined that the limitation condition for the braking suppression operation is not satisfied (step S104/NO), the process proceeds to step S105. Then, in step S105, the execution section 22 switches the setting of the upper limit deceleration and the upper limit deceleration change rate of the emergency braking operation to the second setting and returns to step S102.

The upper limit deceleration set in the second setting is smaller than the upper limit deceleration set in the first setting and the upper limit deceleration change rate set in the second setting is smaller than the upper limit deceleration change rate set in the first setting. That is, the execution section 22 can reduce the upper limit deceleration and the upper limit deceleration change rate by switching the setting of the upper limit deceleration and the upper limit deceleration change rate of the emergency braking operation to the second setting. Accordingly, it is possible to suppress the deceleration and the deceleration change rate generated in the straddle type vehicle 1 due to the emergency braking operation and to suppress the braking of the straddle type vehicle 1 due to the emergency braking operation. That is, in the control flow shown in **Fig. 6****,** the operation that switches the setting of the upper limit deceleration and the upper limit deceleration change rate of the emergency braking operation to the second setting corresponds to the braking suppression operation.

As described above, the execution section 22 executes the braking suppression operation that suppresses the braking of the straddle type vehicle 1 due to the emergency braking operation on the basis of the positional relationship information between the straddle type vehicle 1 and the rear vehicle 5. Accordingly, it is possible to optimize the braking of the straddle type vehicle 1 due to the emergency braking operation by taking into consideration the traffic situation behind the straddle type vehicle 1. Therefore, for example, the approach or contact of the rear vehicle 5 with respect to the straddle type vehicle 1 can be avoided. Thus, it is possible to improve the safety of the straddle type vehicle 1.

Here, it is desirable that the execution section 22 changes the degree of reduction of the upper limit deceleration and the upper limit deceleration change rate of the emergency braking operation on the basis of the positional relationship information between the straddle type vehicle 1 and the rear vehicle 5. For example, the execution section 22 may allow the upper limit deceleration and the upper limit deceleration change rate set in the second setting to be smaller as the inter-vehicle distance D2 between the straddle type vehicle 1 and the rear vehicle 5 becomes shorter. That is, the execution section 22 may decrease the upper limit deceleration and the upper limit deceleration change rate set in the second setting as the possibility of the approach or contact of the rear vehicle 5 with respect to the straddle type vehicle 1 when the emergency braking operation is executed increases. Accordingly, it is possible to more appropriately avoid the approach or contact of the rear vehicle 5 with respect to the straddle type vehicle 1.

However, the execution section 22 may change the degree of reduction of the upper limit deceleration and the upper limit deceleration change rate of the emergency braking operation on the basis of information other than the inter-vehicle distance D2 between the straddle type vehicle 1 and the rear vehicle 5 in the positional relationship information between the straddle type vehicle 1 and the rear vehicle 5. For example, the execution section 22 may change the degree of reduction of the upper limit deceleration and the upper limit deceleration change rate of the emergency braking operation on the basis of TTC or passing time difference of the rear vehicle 5 with respect to the straddle type vehicle 1.

An example of a process executed by the control device 20 has been described above with reference to the flowchart of Fig. 6. However, the process executed by the control device 20 may be a process that is modified from the above-described process example.

For example, an example has been described above in which the execution section 22 reduces both the upper limit deceleration and the upper limit deceleration change rate in the braking suppression operation. However, the execution section 22 may reduce only one of the upper limit deceleration and the upper limit deceleration change rate in the braking suppression operation.

Further, for example, in the braking suppression operation, the execution section 22 may suppress the deceleration generated in the straddle type vehicle 1 due to the emergency braking operation by a method other than reducing the upper limit deceleration. For example, in the braking suppression operation, the execution section 22 may suppress the deceleration generated in the straddle type vehicle 1 due to the emergency braking operation by reducing the target deceleration itself in the emergency braking operation.

Further, for example, in the braking suppression operation, the execution section 22 may suppress the deceleration change rate generated in the straddle type vehicle 1 due to the emergency braking operation by a method other than reducing the upper limit deceleration change rate. For example, in the braking suppression operation, the execution section 22 may suppress the deceleration change rate generated in the straddle type vehicle 1 due to the emergency braking operation by reducing the target deceleration change rate itself in the emergency braking operation.

Further, for example, an example has been described in which the execution section 22 prohibits the braking suppression operation when the limitation condition for the braking suppression operation is satisfied. However, the determination (that is, step S104) on whether the limitation condition for the braking suppression operation is satisfied may be omitted. Further, in the case, the execution section 22 may change the degree of suppression of the braking of the straddle type vehicle 1 on the basis of various information exemplified as the information used in the limitation condition of step S104 (for example, at least one of the vehicle type information of the rear vehicle 5, the vehicle width information of the rear vehicle 5, the blinker information of the rear vehicle 5, the skill level information of the driver of the rear vehicle 5, the information of the traveling position of the straddle type vehicle 1 in the lane width direction, the positional relationship information between the straddle type vehicle 1 and the rear vehicle 5 in the lane width direction, and the straightness determination result). For example, when the determination in step S102 is YES and the braking suppression operation is executed, the execution section 22 may change the degree of reduction of the upper limit deceleration and the upper limit deceleration change rate of the emergency braking operation on the basis of various information described above.

Further, for example, the execution section 22 may adjust the deceleration generated in the straddle type vehicle 1 due to the emergency braking operation on the basis of the positional relationship between the straddle type vehicle 1 and the front object and the positional relationship between the straddle type vehicle 1 and the rear vehicle 5. For example, the execution section 22 may adjust the deceleration generated in the straddle type vehicle 1 due to the emergency braking operation so that the inter-vehicle distance D1 between the straddle type vehicle 1 and the front vehicle 4 substantially matches the inter-vehicle distance D2 between the straddle type vehicle 1 and the rear vehicle 5.

### <Effect of control device>

The effect of the control device 20 according to the embodiment of the present invention will be described.

The control device 20 includes the execution section 22 which executes the emergency braking operation corresponding to the operation that automatically amplifies the braking force generated in the straddle type vehicle 1 in response to the possibility of collision of the straddle type vehicle 1 with respect to the front object (for example, the front vehicle 4) located in front of the straddle type vehicle 1 in a situation in which the brake is operated by the rider of the straddle type vehicle 1 or the operation that automatically generates the braking force in the straddle type vehicle 1 in response to the possibility of collision in a situation in which the brake is not operated. Then, the execution section 22 executes the braking suppression operation that suppresses the braking of the straddle type vehicle 1 due to the emergency braking operation on the basis of the positional relationship information between the straddle type vehicle 1 and the rear vehicle 5 located behind the straddle type vehicle 1. Accordingly, it is possible to optimize the braking of the straddle type vehicle 1 due to the emergency braking operation by taking into consideration the traffic situation behind the straddle type vehicle 1. Therefore, it is possible to avoid, for example, the approach or contact of the rear vehicle 5 with respect to the straddle type vehicle 1. Thus, it is possible to improve the safety of the straddle type vehicle 1.

Desirably, in the control device 20, the execution section 22 suppresses the deceleration generated in the straddle type vehicle 1 due to the emergency braking operation by the braking suppression operation. Accordingly, avoiding the approach or contact of the rear vehicle 5 with respect to the straddle type vehicle 1 by taking into consideration the traffic situation behind the straddle type vehicle 1 is more appropriately realized. Thus, improving the safety of the straddle type vehicle 1 is appropriately realized.

Desirably, in the control device 20, the execution section 22 limits the deceleration to the upper limit deceleration or less in the emergency braking operation and reduces the upper limit deceleration in the braking suppression operation. Accordingly, avoiding the approach or contact of the rear vehicle 5 with respect to the straddle type vehicle 1 by taking into consideration the traffic situation behind the straddle type vehicle 1 is more appropriately realized. Thus, improving the safety of the straddle type vehicle 1 is more appropriately realized.

Desirably, in the control device 20, the execution section 22 changes the degree of reduction of the upper limit deceleration on the basis of the positional relationship information between the straddle type vehicle 1 and the rear vehicle 5. Accordingly, it is possible to more appropriately avoid the approach or contact of the rear vehicle 5 with respect to the straddle type vehicle 1 by taking into consideration of the traffic situation behind the straddle type vehicle 1. Thus, it is possible to more appropriately improve the safety of the straddle type vehicle 1.

Desirably, in the control device 20, the execution section 22 suppresses the deceleration change rate generated in the straddle type vehicle 1 due to the emergency braking operation in the braking suppression operation. Accordingly, avoiding the approach or contact of the rear vehicle 5 with respect to the straddle type vehicle 1 by taking into consideration the traffic situation behind the straddle type vehicle 1 is more appropriately realized. Thus, improving the safety of the straddle type vehicle 1 is appropriately realized.

Desirably, in the control device 20, the execution section 22 limits the deceleration change rate to the upper limit deceleration change rate or less in the emergency braking operation and reduces the upper limit deceleration change rate in the braking suppression operation. Accordingly, avoiding the approach or contact of the rear vehicle 5 with respect to the straddle type vehicle 1 by taking into consideration the traffic situation behind the straddle type vehicle 1 is more appropriately realized. Thus, improving the safety of the straddle type vehicle 1 is more appropriately realized.

Desirably, in the control device 20, the execution section 22 changes the degree of reduction of the upper limit deceleration change rate on the basis of the positional relationship information between the straddle type vehicle 1 and the rear vehicle 5. Accordingly, it is possible to more appropriately avoid the approach or contact of the rear vehicle 5 with respect to the straddle type vehicle 1 by taking into consideration the traffic situation behind the straddle type vehicle 1. Thus, it is possible to more appropriately improve the safety of the straddle type vehicle 1.

Desirably, in the control device 20, the execution section 22 limits the braking suppression operation on the basis of the vehicle type information of the rear vehicle **5.** Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the vehicle type information of the rear vehicle 5. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the vehicle width information of the rear vehicle 5. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the vehicle width information of the rear vehicle 5. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the blinker information of the rear vehicle 5. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the blinker information of the rear vehicle 5. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the skill level information of the driver of the rear vehicle 5. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the skill level information of the driver of the rear vehicle 5. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the information of the traveling position of the straddle type vehicle 1 in the lane width direction. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the information of the traveling position of the straddle type vehicle 1 in the lane width direction. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the positional relationship information between the straddle type vehicle 1 and the rear vehicle 5 in the lane width direction. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the positional relationship information between the straddle type vehicle 1 and the rear vehicle 5 in the lane width direction. In that case, it is possible to avoid unnecessary suppression of the braking of the straddle type vehicle 1 due to the emergency braking operation by limiting the braking suppression operation.

Desirably, in the control device 20, the execution section 22 limits the braking suppression operation on the basis of the determination result of the straightness of at least one of the traveling and traveling road of the straddle type vehicle 1. Accordingly, it is possible to avoid unnecessary suppression of the braking of the straddle type vehicle 1 due to the emergency braking operation by the braking suppression operation. For example, it may be determined that the rear vehicle 5 can easily avoid the straddle type vehicle 1 when the emergency braking operation is executed on the basis of the determination result of the straightness of at least one of the traveling and traveling road of the straddle type vehicle 1. In that case, it is possible to avoid unnecessary suppression of the braking of the straddle type vehicle 1 due to the emergency braking operation by limiting the braking suppression operation.

The present invention is not limited to the description of the embodiment. Modifications are possible within the scope of the invention as defined by the appended claims.

### Reference Signs List

- 1:: Saddle type vehicle
- 2:: Front wheel
- 2a:: Rotor
- 3:: Rear wheel
- 3a:: Rotor
- 4:: Front vehicle (front object)
- 5:: Rear vehicle
- 10:: Brake system
- 11:: Engine
- 12:: Hydraulic pressure control unit
- 12a:: Base body
- 13:: Surrounding environment sensor
- 13f:: Front surrounding environment sensor
- 13r:: Rear surrounding environment sensor
- 14:: Inertial measurement device
- 15:: Front wheel speed sensor
- 16:: Rear wheel speed sensor
- 20:: Control device
- 21:: Acquisition section
- 22:: Execution section
- 31:: Front wheel braking mechanism
- 32:: Rear wheel braking mechanism
- 41:: First brake operation unit
- 42:: Second brake operation unit
- 51:: Master cylinder
- 52:: Reservoir
- 53:: Brake caliper
- 54:: Wheel cylinder
- 55:: Main flow path
- 56:: Sub-flow path
- 57:: Supply flow path
- 61:: Inlet valve
- 62:: Outlet valve
- 63:: Accumulator
- 64:: Pump
- 65:: First valve
- 66:: Second valve
- D1:: Inter-vehicle distance
- D2:: Inter-vehicle distance

## Claims

1. A control device (20) for controlling a behavior of a straddle type vehicle (1), comprising:
an execution section (22) which executes an emergency braking operation corresponding to an operation that automatically amplifies a braking force generated in the straddle type vehicle (1) in response to a possibility of collision of the straddle type vehicle (1) with respect to a front object (4) located in front of the straddle type vehicle (1) in a situation in which a brake is operated by a rider of the straddle type vehicle (1) or corresponding to an operation that automatically generates a braking force in the straddle type vehicle (1) in response to the possibility of collision in a situation in which the brake is not operated,
wherein the execution section (22) executes a braking suppression operation that suppresses braking of the straddle type vehicle (1) due to the emergency braking operation on the basis of positional relationship information between the straddle type vehicle (1) and a rear vehicle (5) located behind the straddle type vehicle (1), and
wherein the execution section (22) limits the braking suppression operation on the basis of vehicle width information of the rear vehicle.

2. The control device according to claim 1,
wherein in the braking suppression operation, the execution section (22) suppresses a deceleration generated in the straddle type vehicle (1) due to the emergency braking operation.

3. The control device according to claim 2,
wherein the execution section (22) limits the deceleration to an upper limit deceleration or less in the emergency braking operation and reduces the upper limit deceleration in the braking suppression operation.

4. The control device according to claim 3,
wherein the execution section (22) changes degree of reduction of the upper limit deceleration on the basis of the positional relationship information.

5. The control device according to claim 1,
wherein in the braking suppression operation, the execution section (22) suppresses a deceleration change rate generated in the straddle type vehicle (1) due to the emergency braking operation.

6. The control device according to claim 5,
wherein the execution section (22) limits the deceleration change rate to an upper limit deceleration change rate or less in the emergency braking operation and reduces the upper limit deceleration change rate in the braking suppression operation.

7. The control device according to claim 6,
wherein the execution section (22) changes degree of reduction of the upper limit deceleration change rate on the basis of the positional relationship information.

8. The control device according to any one of claims 1 to 7,
wherein the execution section (22) limits the braking suppression operation on the basis of vehicle type information of the rear vehicle (5).

9. The control device according to any one of claims 1 to 6,
wherein the execution section (22) limits the braking suppression operation on the basis of blinker information of the rear vehicle (5).

10. The control device according to any one of claims 1 to 6,
wherein the execution section (22) limits the braking suppression operation on the basis of skill level information of a driver of the rear vehicle (5).

11. The control device according to any one of claims 1 to 6,
wherein the execution section (22) limits the braking suppression operation on the basis of information of a traveling position of the straddle type vehicle (1) in a lane width direction.

12. The control device according to any one of claims 1 to 6,
wherein the execution section (22) limits the braking suppression operation on the basis of the positional relationship information between the straddle type vehicle (1) and the rear vehicle (5) in a lane width direction.

13. The control device according to any one of claims 1 to 7,
wherein the execution section (22) limits the braking suppression operation on the basis of a determination result of straightness of at least one of traveling of the straddle type vehicle (1) and traveling road of the straddle type vehicle (1).

14. A control method of controlling a behavior of a straddle type vehicle (1), comprising:
allowing an execution section (22) of a control device (20) to execute an emergency braking operation corresponding to an operation that automatically amplifies a braking force generated in the straddle type vehicle (1) in response to a possibility of collision of the straddle type vehicle (1) with respect to a front object (4) located in front of the straddle type vehicle (1) in a situation in which a brake is operated by a rider of the straddle type vehicle (1) or corresponding to an operation that automatically generates a braking force in the straddle type vehicle (1) in response to the possibility of collision in a situation in which the brake is not operated,
wherein the execution section (22) executes a braking suppression operation that suppresses braking of the straddle type vehicle (1) due to the emergency braking operation on the basis of positional relationship information between the straddle type vehicle (1) and a rear vehicle (5) located behind the straddle type vehicle (1), and
wherein the execution section (22) limits the braking suppression operation on the basis of vehicle width information of the rear vehicle (5).

## Patentansprüche

1. Steuervorrichtung (20) zum Steuern eines Verhaltens eines Spreizsitzfahrzeugs (1), umfassend:
einen Ausführungsabschnitt (22), der einen Notbremsvorgang ausführt, der einem Vorgang entspricht, der eine Bremskraft, die in dem Spreizsitzfahrzeug (1) als Reaktion auf eine mögliche Kollision des Spreizsitzfahrzeugs (1) in Bezug auf ein davor befindliches Objekt (4) erzeugt wird, das sich vor dem Spreizsitzfahrzeug (1) befindet, in einer Situation automatisch verstärkt, in der eine Bremse durch einen Fahrer des Spreizsitzfahrzeugs (1) betätigt wird, oder der einem Vorgang entspricht, der eine Bremskraft in dem Spreizsitzfahrzeug (1) als Reaktion auf die mögliche Kollision in einer Situation automatisch erzeugt, in der die Bremse nicht betätigt wird,
wobei der Ausführungsabschnitt (22) einen Bremsunterdrückungsvorgang ausführt, der ein Bremsen des Spreizsitzfahrzeugs (1) aufgrund des Notbremsvorgangs auf Basis von Positionsbeziehungsinformationen zwischen dem Spreizsitzfahrzeug (1) und einem dahinter befindlichen Fahrzeug (5), das sich hinter dem Spreizsitzfahrzeug (1) befindet, unterdrückt, und
wobei der Ausführungsabschnitt (22) den Bremsunterdrückungsvorgang auf Basis von Fahrzeugbreiteninformationen des dahinter befindlichen Fahrzeugs begrenzt.

2. Steuervorrichtung nach Anspruch 1,
wobei bei dem Bremsunterdrückungsvorgang der Ausführungsabschnitt (22) eine Verzögerung unterdrückt, die in dem Spreizsitzfahrzeug (1) aufgrund des Notbremsvorgangs erzeugt wird.

3. Steuervorrichtung nach Anspruch 2,
wobei der Ausführungsabschnitt (22) die Verzögerung bei dem Notbremsvorgang auf eine Verzögerungsobergrenze oder kleiner begrenzt und die Verzögerungsobergrenze bei dem Bremsunterdrückungsvorgang verringert.

4. Steuervorrichtung nach Anspruch 3,
wobei der Ausführungsabschnitt (22) den Grad einer Verringerung der Verzögerungsobergrenze auf Basis der Positionsbeziehungsinformationen ändert.

5. Steuervorrichtung nach Anspruch 1,
wobei bei dem Bremsunterdrückungsvorgang der Ausführungsabschnitt (22) eine Verzögerungsänderungsrate unterdrückt, die in dem Spreizsitzfahrzeug (1) aufgrund der Notbremsvorgang erzeugt wird.

6. Steuervorrichtung nach Anspruch 5,
wobei der Ausführungsabschnitt (22) die Verzögerungsänderungsrate bei dem Notbremsvorgang auf eine Verzögerungsänderungsratenobergrenze oder kleiner begrenzt und die Verzögerungsänderungsratenobergrenze bei dem Bremsunterdrückungsvorgang verringert.

7. Steuervorrichtung nach Anspruch 6,
wobei der Ausführungsabschnitt (22) den Grad einer Verringerung der Verzögerungsänderungsratenobergrenze auf Basis der Positionsbeziehungsinformationen ändert.

8. Steuervorrichtung nach einem der Ansprüche 1 bis 7,
wobei der Ausführungsabschnitt (22) den Bremsunterdrückungsvorgang auf Basis von Fahrzeugtypinformationen des dahinter befindlichen Fahrzeugs (5) begrenzt.

9. Steuervorrichtung nach einem der Ansprüche 1 bis 6,
wobei der Ausführungsabschnitt (22) den Bremsunterdrückungsvorgang auf Basis von Blinkerinformationen des dahinter befindlichen Fahrzeugs (5) begrenzt.

10. Steuervorrichtung nach einem der Ansprüche 1 bis 6,
wobei der Ausführungsabschnitt (22) den Bremsunterdrückungsvorgang auf Basis von Fähigkeitsniveauinformationen eines Fahrers des dahinter befindlichen Fahrzeugs (5) begrenzt.

11. Steuervorrichtung nach einem der Ansprüche 1 bis 6,
wobei der Ausführungsabschnitt (22) den Bremsunterdrückungsvorgang auf Basis von Informationen einer Fahrposition des Spreizsitzfahrzeugs (1) in einer Fahrspurbreitenrichtung begrenzt.

12. Steuervorrichtung nach einem der Ansprüche 1 bis 6,
wobei der Ausführungsabschnitt (22) den Bremsunterdrückungsvorgang auf Basis der Positionsbeziehungsinformationen zwischen dem Spreizsitzfahrzeug (1) und dem dahinter befindlichen Fahrzeug (5) in einer Fahrspurbreitenrichtung begrenzt.

13. Steuervorrichtung nach einem der Ansprüche 1 bis 7,
wobei der Ausführungsabschnitt (22) den Bremsunterdrückungsvorgang auf Basis eines Bestimmungsergebnisses einer Geradheit einer Fahrt des Spreizsitzfahrzeugs (1) und/oder einer Fahrbahn des Spreizsitzfahrzeugs (1) begrenzt.

14. Steuerverfahren zum Steuern eines Verhaltens eines Spreizsitzfahrzeugs (1), umfassend:
Zulassen, dass ein Ausführungsabschnitt (22) einer Steuervorrichtung (20) einen Notbremsvorgang ausführt, der einem Vorgang entspricht, der eine Bremskraft, die in dem Spreizsitzfahrzeug (1) als Reaktion auf eine mögliche Kollision des Spreizsitzfahrzeugs (1) in Bezug auf ein davor befindliches Objekt (4) erzeugt wird, das sich vor dem Spreizsitzfahrzeug (1) befindet, in einer Situation automatisch verstärkt, in der eine Bremse durch einen Fahrer des Spreizsitzfahrzeugs (1) betätigt wird, oder der einem Vorgang entspricht, der eine Bremskraft in dem Spreizsitzfahrzeug (1) als Reaktion auf die mögliche Kollision in einer Situation automatisch erzeugt, in der die Bremse nicht betätigt wird,
wobei der Ausführungsabschnitt (22) einen Bremsunterdrückungsvorgang ausführt, der ein Bremsen des Spreizsitzfahrzeugs (1) aufgrund des Notbremsvorgangs auf Basis von Positionsbeziehungsinformationen zwischen dem Spreizsitzfahrzeug (1) und einem dahinter befindlichen Fahrzeug (5), das sich hinter dem Spreizsitzfahrzeug (1) befindet, unterdrückt, und
wobei der Ausführungsabschnitt (22) den Bremsunterdrückungsvorgang auf Basis von Fahrzeugbreiteninformationen des dahinter befindlichen Fahrzeugs (5) begrenzt.

## Revendications

1. Dispositif de commande (20) destiné à commander un comportement d'un véhicule du type à selle (1) comprenant :
une section d'exécution (22) qui exécute une opération de freinage d'urgence correspondant à une opération qui amplifie automatiquement une force de freinage générée dans le véhicule du type à selle (1) en réponse à une possibilité de collision du véhicule du type à selle (1) par rapport à un objet avant (4) situé devant le véhicule du type à selle (1) dans une situation où un frein est actionné par un conducteur du véhicule du type à selle (1) ou correspondant à une opération qui génère automatiquement une force de freinage dans le véhicule du type à selle (1) en réponse à la possibilité de collision dans une situation où le frein n'est pas actionné, la section d'exécution (22) exécutant une opération de suppression de freinage qui supprime le freinage du véhicule du type à selle (1) en raison de l'opération de freinage d'urgence sur la base d'informations de relation de position entre le véhicule du type à selle (1) et un véhicule arrière (5) situé derrière le véhicule du type à selle (1), et
la section d'exécution (22) limitant l'opération de suppression de freinage sur la base d'informations de largeur de véhicule du véhicule arrière.

2. Dispositif de commande selon la revendication 1,
lors de l'opération de suppression de freinage, la section d'exécution (22) supprimant une décélération générée dans le véhicule du type à selle (1) en raison de l'opération de freinage d'urgence.

3. Dispositif de commande selon la revendication 2,
la section d'exécution (22) limitant la décélération à une décélération limite supérieure ou moins lors de l'opération de freinage d'urgence et réduisant la décélération limite supérieure lors de l'opération de suppression de freinage.

4. Dispositif de commande selon la revendication 3,
la section d'exécution (22) modifiant le degré de réduction de la décélération limite supérieure sur la base des informations de relation de position.

5. Dispositif de commande selon la revendication 1,
lors de l'opération de suppression de freinage, la section d'exécution (22) supprimant un taux de changement de décélération généré dans le véhicule du type à selle (1) en raison de l'opération de freinage d'urgence.

6. Dispositif de commande selon la revendication 5,
la section d'exécution (22) limitant le taux de changement de décélération à un taux de changement de décélération limite supérieure ou moins lors de l'opération de freinage d'urgence et réduisant le taux de changement de décélération limite supérieure lors de l'opération de suppression de freinage.

7. Dispositif de commande selon la revendication 6,
la section d'exécution (22) modifiant le degré de réduction du taux de changement de décélération limite supérieure sur la base des informations de relation de position.

8. Dispositif de commande selon l'une quelconque des revendications 1 à 7,
la section d'exécution (22) limitant l'opération de suppression de freinage sur la base d'informations de type de véhicule du véhicule arrière (5).

9. Dispositif de commande selon l'une quelconque des revendications 1 à 6,
la section d'exécution (22) limitant l'opération de suppression de freinage sur la base d'informations de clignotant du véhicule arrière (5).

10. Dispositif de commande selon l'une quelconque des revendications 1 à 6,
la section d'exécution (22) limitant l'opération de suppression de freinage sur la base d'informations de niveau de compétence d'un conducteur du véhicule arrière (5).

11. Dispositif de commande selon l'une quelconque des revendications 1 à 6,
la section d'exécution (22) limitant l'opération de suppression de freinage sur la base d'informations relatives à une position de déplacement du véhicule du type à selle (1) dans le sens de la largeur de voie.

12. Dispositif de commande selon l'une quelconque des revendications 1 à 6,
la section d'exécution (22) limitant l'opération de suppression de freinage sur la base des informations de relation de position entre le véhicule du type à selle (1) et le véhicule arrière (5) dans le sens de la largeur de voie.

13. Dispositif de commande selon l'une quelconque des revendications 1 à 7,
la section d'exécution (22) limitant l'opération de suppression de freinage sur la base d'un résultat de détermination de la rectitude d'au moins l'un des déplacements du véhicule du type à selle (1) et de la route de déplacement du véhicule du type à selle (1).

14. Procédé de commande pour commander un comportement d'un véhicule du type à selle (1), le procédé comprenant l'étape consistant à :
permettre à une section d'exécution (22) d'un dispositif de commande (20) d'exécuter une opération de freinage d'urgence correspondant à une opération qui amplifie automatiquement une force de freinage générée dans le véhicule du type à selle (1) en réponse à une possibilité de collision du véhicule du type à selle (1) par rapport à un objet avant (4) situé devant le véhicule du type à selle (1) dans une situation où un frein est actionné par un conducteur du véhicule du type à selle (1) ou correspondant à une opération qui génère automatiquement une force de freinage dans le véhicule du type à selle (1) en réponse à la possibilité de collision dans une situation où le frein n'est pas actionné,
la section d'exécution (22) exécutant une opération de suppression de freinage qui supprime le freinage du véhicule du type à selle (1) en raison de l'opération de freinage d'urgence sur la base d'informations de relation de position entre le véhicule du type à selle (1) et un véhicule arrière (5) situé derrière le véhicule du type à selle (1), et
la section d'exécution (22) limitant l'opération de suppression de freinage sur la base des informations de largeur de véhicule du véhicule arrière (5).
